# EUROPÄISCHE PATENTANMELDUNG

(11) **EP 1 186 581 A2**
(43) Veröffentlichungstag der Anmeldung: **13.03.2002**
(21) Anmeldenummer: 01121819.5
(22) Anmeldetag: 11.09.2001
(51) Int. Cl.: C05D 9/00, C05D 9/02, C05F 11/00

(54) **Stickstofffreier Stoff zur Verwendung als Düngemittel**

(30) Priorität: 12.09.2000 AT 6702000
(71) Anmelder: Karner, Robert, 3041 Asperhofen (AT)
(72) Erfinder: Karner, Robert, 3041 Asperhofen (AT)
(74) Vertreter: Grabherr, Claudia, Dipl.Ing.

(57) **Zusammenfassung**

Ein stickstofffreier Stoff zur Verwendung als streubares Düngemittel, Bodenhilfsstoff, Kultursubstrat oder Pflanzenhilfsmittel enthält 50 bis 90 Gew.% Gesteinsmehl, vorzugsweise aus einer Mischung von verschiedenen Gesteinsmineralien, 5 bis 50 Gew.% 3-Schicht-Tonmineralien, 1 bis 25 Gew.% Zeolithe sowie 1 bis 5 Gew.% Bindemittel, insbesondere Dextrin, und stickstoffbindende Bakterien und 0,1 bis 10 Gew.% einer trocken zugemischten Sulfatmischung, die Magnesium-, Natrium-, Kupfer-, Mangan-, Zink- und/oder Eisensulfat beinhaltet.

## Beschreibung

Die Erfindung betrifft einen stickstofffreien Stoff zur Verwendung als streubares Düngemittel, Bodenhilfsstoff, Kultursubstrat oder Pflanzenhilfsmittel enthaltend 50 bis 90 Gew.% Gesteinsmehl, vorzugsweise aus einer Mischung von verschiedenen Gesteinsmineralien, 5 bis 50 Gew.% 3-Schicht-Tonmineralien, 1 bis 25 Gew.% Zeolithe sowie 1 bis 5 Gew.% Bindemittel, insbesondere Dextrin, und stickstoffbindende Bakterien. Die Erfindung betrifft weiters ein Verfahren zur Herstellung eines solchen stickstofffreien Stoffes.

Der Einsatz von Düngemitteln, Bodenhilfsstoffen, Kultursubstraten oder Pflanzenhilfsmitteln in der Landwirtschaft sorgt für hohe Produktivität und Qualitätssicherheit, ist daher aus ökonomischer Sicht aus diesem Wirtschaftszweig nicht mehr wegzudenken.

Andererseits ist es jedoch bekannt, daß der massive Einsatz von Düngemittel in den letzten Jahrzehnten zu einer Schädigung des Bodens geführt hat, der man zuerst durch weitere Erhöhung der Düngemittelzufuhr begegnete. Die Folge war eine Zerstörung des ökologischen Gleichgewichtes des Bodens und ein Auswaschen der im Boden enthaltenen Mineralstoffe, sowie die Gefährdung des Grundwassers vor allem durch Nitrate.

Es ist daher eine Notwendigkeit und Aufgabe der vorliegenden Erfindung, die Stickstoffzufuhr durch Düngemittel zu reduzieren, um die Nitratbelastung zu senken und dennoch die Versorgung der Nutzpflanzen mit Stickstoff zu gewährleisten, um nicht auf die wachstumsfördernde Wirkung von Haupt- und Spurennährstoffen auf die Nutzpflanzen verzichten zu müssen.

Die Aufgabe wird dadurch gelöst, daß der eingangs beschriebene Stoff ferner 0,1 bis 10 Gew.% einer trocken zugemischten Sulfatmischung enthält, die Magnesium-, Natrium-, Kupfer-, Mangan-, Zink- und/oder Eisensulfat beinhaltet.

Zur erfindungsgemäßen Herstellung eines stickstofffreien Stoffes zur Verwendung als Streubares Düngemittel, Bodenhilfsstoff, Kultursubstrat oder Pflanzenhilfsmittel, wird Gesteinsmehl, vorzugsweise aus einer Mischung von verschiedenen feinst vermahlenen Gesteinsmineralien, in einem Anteil 50 bis 90 Gew.% mit 3-Schicht-Tonmineralien in einem Anteil von 5 bis 50 Gew.%, Zeolithen in einem Anteil von 1 bis 25 Gew.% sowie Bindemittel, insbesondere Dextrin mit Hinzugabe von Wasser, in einem Anteil von 1 bis 5 Gew.% und stickstoffbindende Bakterien vermischt. Dann wird eine Sulfatmischung in einem Anteil von 0,1 bis 10 Gew.% trocken zugemischt, die Magnesium-, Natrium-, Kupfer-, Mangan-, Zink- und/oder Eisensulfat beinhaltet.

Durch die Einmischung der Sulfate wird der pH-Wert zum Neutralen hin verändert. Mit dem im Sulfat enthaltenen Schwefel wird eine rasche und verdampfungssichere Komponente als Nährstoff angeboten.

Durch das trockene Zumischen der Sulfatverbindungen wird erreicht, daß sich kein ionisches Gleichgewicht bilden kann und die verschiedenen eingemischten Sulfatverbindungen jede für sich in direktem Zusammenhang, proportional zueinander anhand ihrer Elementreihenfolge, zur Wirkung in der Pflanze kommt. Die Aufnahme wiederum hängt direkt von der Intensität der Lichtquelle (Sonnenbestrahlung) ab. So kann z.B. bei Verwendung des Stoffes als Düngemittel die Düngemittelmenge um bis zu 40% gegenüber der herkömmlich eingesetzten Menge reduziert werden ohne daß die Düngewirkung abnimmt.

Weiters fördert diese Trockenmischung auch den sogenannten Antagonismus-Synergismuseffekt und es kann daher zu keiner Überreaktion (Überdüngung eines einzelnen Nährstoffes) in der Pflanze kommen bzw. wird die Anreicherung eines einzelnen Elementes erschwert. Die Wirkung der einzelnen Nährstoffe bleibt durch das trockene Einmischen erhalten. Die Pflanze kann frei wählen welche Nährstoffe aufgenommen werden und man kann feststellen, daß in Perioden längerer anhaltender Trockenheit der Wasserstreß (Trockenheit) nicht mehr so große Bedeutung hat (Schutzwelke tritt später ein) und somit Trockenperioden von den Pflanzen besser überstanden werden.

Ferner reduziert das Sulfat den Wassergehalt durch Bildung von Hydratwasser, was sich positiv auf die Lagerfähigkeit auswirkt.

Der erfindungsgemäße Stoff mobilisiert die im Boden vorhandenen Nährstoffreserven (z.B. P, K, Spurenelemente) und enthält darüberhinaus wichtige Haupt- und Spurenelemente in pflanzenverfügbarer Form. Durch seinen hohen Kieselsäureanteil (Silizium) stärkt der Stoff das Pflanzengewebe. Der Stoff verbessert die Bodenstruktur und fördert das Bodenleben.

Der Stoff erhöht die Vitalität der Pflanzenbestände. Zellwände sind stärker entwickelt, so daß die Aufwandmengen der Fungizide und Wachstumsregulatoren deutlich reduziert bzw. teilweise sogar unterbleiben können. Mit der Anwendung des Stoffes kann gleichzeitig die Erhaltungskalkung eingespart werden. Der Stoff ermöglicht somit nennenswerte Kosteneinsparung.

Die Sulfate erhöhen die Wirksamkeit des Stoffes und beschleunigen die Zurverfügungstellung verschiedener Nährstoffe im Boden-Nährstoffhaushalt.

Vorzugsweise liegt der Stoff als Granulat vor, auf den die stickstoffbindenden Bakterien mit einer Nährlösung aufgesprüht sind, die vorzugsweise aus Acetaten und Molybdat besteht.

Dabei wird nach der Granulierung über einen Peletierteller das Granulat getrocknet und gesiebt. Gleich nach der Siebung erfolgt die Aufspritzung der stickstoffbindenden Bakterien (Acotobacter) mit der Nährlösung bestehend vorzugsweise aus Acetaten und Molybdat.

Das Granulat wird wie ein Grunddüngemittel angewendet. Aufgrund seiner Körnung läßt sich das Granulat mit jedem Düngerstreuer ausbringen.

Für Versuchszwecke wurde ein Granulat mit folgenden Mengenverhältnissen hergestellt. 25% Dolomite, 25% Biolit (zur Hälfte pH-neutraler bzw. saurer Basalt), 40% Tonverbindungen (Blähtonanteil 15%., 25% Illit-Vermiculit-Mischung, wobei die Mischung aus Illit und Vermiculit aus 5 - 54% Illit und 10 - 81,7% Vermiculit bestehen kann) und 4% quarzfreie Zeolithe (Klinoptilolith - Naturzeolith) wurden mit 2% Dextrin als Bindemittel (aus Stärke aus landwirtschaftlichen Nutzpflanzen gewonnen) und 1% Wasser vermischt. Und es wurden 3% Sulfate trocken zugemischt.

Der Nährstoffinhalt war, wie folgt:

| **Hauptnährstoffe:** | | **Spurennährstoffe:** |
|---|---|---|
| SiO₂ | 30,00% Kieselsäure | Eisen |
| CaO | 16,20% Calcium | Mangan |
| MgO | 9,40% Magnesium | Zink |
| K₂O | 0,41% Kalium | Kupfer |
| P₂O₅ | 0,19% Phosphat | Bor |
| | | Molybdän |
| | | Kobalt |
| | | Selen |

Ein daraus hergestelltes Granulat wurde mit einer, stickstoffbindende Bakterien (Azotobacter) enthaltenden Lösung besprüht und zur Düngung bei Anbau von zahlreichen landwirtschaftlichen Kulturen versuchsweise eingesetzt. Als Nährlösung der Bakterien (Azotobacter - Azotobacteraceae-Stämme) wurde Zuckerwasser mit Mg, Na, Fe, Cu, Zn, Mn und Mo angereichert, die mit einer Essigsäure zuvor aufgeschlossen wurden (Acetat). In diese Nährlösung wurden bei einer Temperatur von ca. 25°C die stickstoffbindenden Bakterien zur Vermehrung beigegeben. Nach einigen Tagen wurde bei einer guten Vermehrung die Flüssigkeit um ca. zwei Drittel mit Wasser verdünnt, und zur Aufsprühung auf das Granulat eingesetzt. Es zeigte gute Auswirkungen auf die Fruchtqualität und Ertragsmenge und eine Verbesserung der Bodenqualität.

Die Zumischung von Sulfaten hat eine äußerst rasche und sehr effiziente Wirkungssteigerung des Granulates erreicht, welche nach kurzer Zeit der oberflächlichen Ausbringung optisch sehr rasch durch verstärkte Wachstumstätigkeit sowie dunkleres Blattgrün zusätzlich zu bemerken war. Aufgrund dieser erfindungsgemäßen Zusammensetzung konnte die Kurz- und Langzeitwirkung immens verbessert werden.

## Patentansprüche

1. Stickstofffreier Stoff zur Verwendung als streubares Düngemittel, Bodenhilfsstoff, Kultursubstrat oder Pflanzenhilfsmittel enthaltend 50 bis 90 Gew.% Gesteinsmehl, vorzugsweise aus einer Mischung von verschiedenen Gesteinsmineralien, 5 bis 50 Gew.% 3-Schicht-Tonmineralien, 1 bis 25 Gew.% Zeolithe sowie 1 bis 5 Gew.% Bindemittel, insbesondere Dextrin, und stickstoffbindende Bakterien, **dadurch gekennzeichnet, daß** der Stoff ferner 0,1 bis 10 Gew.% einer trocken zugemischten Sulfatmischung enthält, die Magnesium-, Natrium-, Kupfer-, Mangan-, Zink- und/oder Eisensulfat beinhaltet.

2. Stoff nach Anspruch 1, **dadurch gekennzeichnet, daß** der Stoff als Granulat vorliegt, auf den die stickstoffbindenden Bakterien mit einer Nährlösung aufgesprüht sind, die vorzugsweise aus Acetaten und Molybdat besteht.

3. Verfahren zur Herstellung eines stickstofffreien Stoffes zur Verwendung als streubares Düngemittel, Bodenhilfsstoff, Kultursubstrat oder Pflanzenhilfsmittel, bei dem Gesteinsmehl, vorzugsweise aus einer Mischung von verschiedenen Gesteinsmineralien, in einem Anteil 50 bis 90 Gew.% mit 3-Schicht-Tonmineralien in einem Anteil von 5 bis 50 Gew.%, Zeolithen in einem Anteil von 1 bis 25 Gew.% sowie Bindemittel, insbesondere Dextrin, in einem Anteil von 1 bis 5 Gew.% und stickstoffbindende Bakterien vermischt werden, **dadurch gekennzeichnet, daß** dieser Mischung ferner eine Sulfatmischung in einem Anteil von 0,1 bis 10 Gew.% trocken zugemischt wird, die Magnesium-, Natrium-, Kupfer-, Mangan-, Zink- und/oder Eisensulfat beinhaltet.

4. Verfahren nach Anspruch 3, **dadurch gekennzeichnet, daß** der Stoff granuliert, getrocknet, und anschließend mit einer stickstoffbindende Bakterien enthaltenden Nährlösung besprüht wird, die vorzugsweise aus Acetaten und Molybdat besteht.
